# EUROPÄISCHE PATENTSCHRIFT

(11) **EP 1 021 646 B1**
(45) Veröffentlichungstag und Bekanntmachung des Hinweises auf die Patenterteilung: **07.05.2003**
(21) Anmeldenummer: 99931174.9
(22) Anmeldetag: 24.06.1999
(51) Int. Cl.: F02B 29/04, F02B 37/007, F02B 47/08, F02M 25/07

(54) **BI-TURBOAUFGELADENE BRENNKRAFTMASCHINE MIT ABGASRÜCKFÜHRUNG**
BI-TURBOCHARGER INTERNAL COMBUSTION ENGINE WITH EXHAUST GAS RECYCLING
MOTEUR A COMBUSTION INTERNE A DEUX TURBOCOMPRESSEURS, AVEC RECYCLAGE DES GAZ D'ECHAPPEMENT

(30) Priorität: 08.08.1998 DE 19835978
(43) Veröffentlichungstag der Anmeldung: 26.07.2000
(73) Patentinhaber: DaimlerChrysler AG, 70567 Stuttgart (DE)
(72) Erfinder: ARBEITER, Erich, D-73207 Plochingen (DE); FAUSTEN, Hans, D-73650 Winterbach (DE); HASSLER, Marcel, D-73733 Esslingen (DE); LÖFFLER, Axel, D-73207 Plochingen (DE); WEBER, Siegfried, D-70619 Stuttgart (DE)
(86) Internationale Anmeldenummer: EP9904405
(87) Internationale Veröffentlichungsnummer: WO00008319

(56) Entgegenhaltungen:
- EP-A- 0 790 393
- WO-A-96/28648
- DE-A- 4 038 918
- DE-C- 19 524 603
- US-A- 5 607 010

## Beschreibung

Die Erfindung betrifft eine Brennkraftmaschine, die mittels zwei Abgasturboladern aufgeladen ist und eine Abgasrückführung aufweist, mit den Merkmalen des Oberbegriffs des Anspruchs 1.

Eine derartige Brennkraftmaschine ist aus der EP 0 790 393 A1 bekannt und besitzt mehrere Zylinder, die in zwei Reihen, sogenannte "Zylinderbänke", angeordnet sind. Des weiteren sind zwei Abgasturbolader vorgesehen, die jeweils durch die Abgase der Zylinder einer Zylinderbank angetrieben sind. Eine Abgasrückführung umfasst zwei Abgasabführungsleitungen, die jeweils den rückzuführenden Teil der Abgase der Zylinder einer Zylinderbank stromauf des jeweiligen Abgasturboladers abzweigen und stromab der Abgasturbolader über separate Ansaugrohre einer Luftzuführung zuleiten. In den Ansaugrohren sind stromauf der Abgasabführungsleitungen Drosselklappen angeordnet, die als Abgasrückführungsventile zum Einstellen der Menge der rückgeführten Abgase dienen.

Aus der DE 36 33 405 A1 ist eine Dieselbrennkraftmaschine bekannt, deren Zylinder in zwei Reihen angeordnet sind, wobei die Abgase jeder Zylinderreihe einen Abgasturbolader antreiben und wobei die Abgasturbolader bei der bekannten Brennkraftmaschine jeweils dazu dienen, nur die Zylinder der zugehörigen Zylinderreihe aufzuladen.

Aus der DE 44 16 572 C1 ist eine Brennkraftmaschine bekannt, deren Zylinder mit Hilfe von zwei parallel geschalteten Abgasturboladern aufgeladen werden, wobei die Abgasturbolader von den Abgasen der Zylinder angetrieben werden. Darüber hinaus verfügt die bekannte Brennkraftmaschine über eine Abgasrückführung, bei der ein Teil der Abgase vor deren Eintritt in eine Turbine eines der Abgasturbolader abgezweigt wird und vor einem Verdichter dieses Abgasturboladers der Ansaugluft zugemischt wird.

Die vorliegende Erfindung beschäftigt sich mit dem Problem, das Leistungsverhalten einer Brennkraftmaschine der eingangs genannten Art zu verbessern.

Dieses Problem wird durch eine Brennkraftmaschine mit den Merkmalen des Anspruches 1 gelöst.

Die Abgasrückführung der erfindungsgemäßen Brennkraftmaschine beruht auf dem Prinzip, die Abgase von dem Druckniveau, das vor dem Turbineneintritt herrscht, auf das Druckniveau zurückzuführen, das nach dem Verdichteraustritt (ggf. nach einem Ladeluftkühler) herrscht. Dabei sind den getrennten Zylinderreihen bzw. Zylinderbänken jeweils separate Abgasabführungsleitungen zugeordnet, die für die Abgasrückführung in einer gemeinsamen Rückführungsleitung einmünden, so daß die rückzuführenden Abgasteilmengen beider Zylinderbänke miteinander vermischt sind, bevor sie durch die Rückführungsleitung in die Luftzuführung eingeleitet bzw. der Ladeluft beigemischt werden. Aufgrund dieser Anordnung ergeben sich folgende Vorteile:

Für die Ladeluft wird nur ein gemeinsamer Luftsammler, eine sogenannte "Airbox", benötigt, in der nur ein Ladedruckfühler angeordnet ist. Außerdem wird nur ein Auflade-Regelkreis benötigt, der ggf. eine Differenzausregelung für die beiden Turbolader durchführt. Für die Abgasrückführung ist nur ein Abgasrückführregelkreis erforderlich, der mit entsprechenden Ventilmitteln die jeweils erforderliche Abgasrückführungsrate regelt, bzw. einstellt. Darüber hinaus kann bei der erfindungsgemäßen Anordnung ein gemeinsamer Ladeluftkühler verwendet werden, der zweckmäßigerweise mit einer gemeinsamen Drosselklappe ausgestattet werden kann, um ggf. das Fördergefälle für die Abgasrückführung zu erhöhen. Außerdem braucht zur Kühlung der rückgeführten Abgase nur ein Abgasrückführungswärmetauscher vorgesehen werden, der in der gemeinsamen Rückführungsleitung anzuordnen ist.

Da die jeweils einer Zylinderbank zugeordneten Abgasabführungsleitungen in eine gemeinsame Rückführungsleitung einmünden, ist zwischen den beiden Abgasabführungsleitungen eine kommunizierende Verbindung ausgebildet. Die gemeinsame Rückführungsleitung wird unter anderem zur Erzielung eines Druckausgleiches zwischen den nicht völlig identisch arbeitenden Abgasturboladern benötigt. Die erfindungsgemäße Brennkraftmaschine weist als wesentliches Merkmal Sperrmittel auf, mit denen die zwischen den beiden Abgasabführungsleitungen ausgebildete kommunizierende Verbindung absperrbar ist.

Diese Maßnahme beruht auf der Erkenntnis, daß in einem relativ niedrigen Drehzahlbereich der Brennkraftmaschine Druckpulsationen in den Zylinderbänken entstehen, die durch die kommunizierende Verbindung zwischen den Abgasabführungsleitungen Masseschwingungen erzeugen bzw. induzieren. Aufgrund dieser Masseschwingungen geht ein Teil der Stoßenergie an der Gesamtabgasenergie in Form von Wandwärmeverlusten und Reibungsverlusten in den miteinander verbundenen Abgasabführungsleitungen verloren. Dies hat zur Folge, daß sich in dem genannten relativ niedrigen Drehzahlbereich nur ein relativ geringer Ladedruck aufbauen kann, so daß ein vergleichweise niedriges Drehmoment zur Verfügung steht. Dies führt dazu, daß die Leistungsfähigkeit der Brennkraftmaschine ebenfalls relativ gering ist.

Während im genannten, niedrigen Drehzahlbereich im wesentlichen eine sogenannte Stoßaufladung vorhanden ist, liegt bei höheren Drehzahlen ausschließlich eine sogenannte Stauaufladung vor, bei der die genannten Masseschwingungen mit den zugehörigen Folgen nicht auftreten. Beim Beschleunigen der Brennkraftmaschine macht sich der Übergang von der Stoßaufladung zur reinen Stauaufladung signifikant bemerkbar, wobei ein derartiger Leistungssprung unerwünscht ist.

Mit Hilfe der erfindungsgemäß vorgeschlagenen Sperrmittel kann diese kommunizierende Verbindung zwischen den Abgasabführungsleitungen unterbrochen bzw. gesperrt werden, wodurch die Druckpulsationen keine Masseschwingungen erzeugen können, so daß die dadurch verursachten Verluste nicht eintreten. Infolgedessen ergibt sich für die erfindungsgemäße Brennkraftmaschine im genannten, niedrigen Drehzahlbereich eine beträchtliche Leistungssteigerung bzw. Drehmomenterhöhung.

Mit Hilfe der erfindungsgemäßen Ausgestaltung der Brennkraftmaschine können bei relativ niedrigen kritischen Drehzahlen der Brennkraftmaschine die Abgasabführungsleitungen voneinander getrennt werden, wobei die Aufladung der Abgasturbolader dann völlig unabhängig voneinander erfolgen kann, wodurch sich eine maximale Leistungssteigerung für die Brennkraftmaschine ergibt. Andererseits können bei unkritischen Drehzahlbereichen die Vorteile der gemeinsamen einfachen Regelkreise für die Abgasrückführung ausgenutzt werden.

Darüber hinaus kann für den Fall, daß die als Abgasrückführungsventil dienenden Ventilmittel stromauf eines ggf. in der Rückführungsleitung angeordneten Abgaswärmetauschers angeordnet sind, gewährleistet werden, daß die Ventilmittel bei geöffneten Sperrmitteln nur mit heißem Abgas durchströmt werden, wodurch verhindert wird, daß ggf. im Abgaswärmetauscher anfallendes Kondensat in den Ventilmitteln zu Versottungsproblemen, das heißt zu einem Verkleben der Ventilmittel, führt.

Die Leistungsfähigkeit einer erfindungsgemäßen Brennkraftmaschine kann in besonderer Weise dadurch gesteigert werden, daß bei einem relativ niedrigen Drehzahlbereich der Brennkraftmaschine mit den Sperrmitteln die kommunizierende Verbindung zwischen den Abgasabführungsleitungen gesperrt wird, insbesondere kann dann auch die Abgasrückführung gesperrt sein. Mit Hilfe dieser Maßnahmen ergibt sich in dem niedrigen Drehzahlbereich, in dem die Abgasabführungsleitungen gesperrt sind, die vorstehend genannte Leistungssteigerung der Brennkraftmaschine. Dabei kann vernachlässigt werden, daß in dieser Zeit ggf. keine der Abgasreinigung dienende Abgasrückführung stattfindet. Denn aufgrund der gesteigerten Leistungsfähigkeit bzw. des erhöhten zur Verfügung stehenden Motordrehmomentes, kann diese Motorbetriebsphase aufgrund des gesteigerten Beschleunigungsvermögens rasch verlassen werden. Unmittelbar nach dem Verlassen des kritischen Drehzahlbereiches können die Sperrmittel die Abgasabführungsleitungen wieder miteinander verbinden, die ggf. abgeschaltete Abgasrückführung kann wieder aktiviert werden, so daß die Brennkraftmaschine dann in Motorbetriebsbereichen arbeitet, in denen eine optimierte Abgasreinigung stattfinden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine Prinzipsdarstellung einer ersten Ausführungsform einer erfindungsgemäßen Brennkraftmaschine und
- Fig. 2: eine Prinzipsdarstellung einer zweiten Ausführungsform der erfindungsgemäßen Brennkraftmaschine.

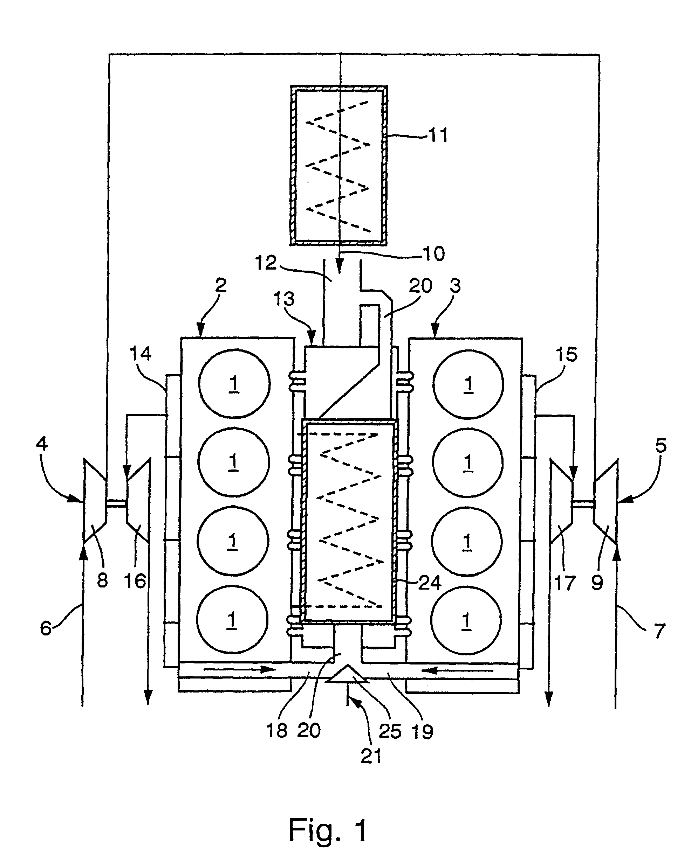

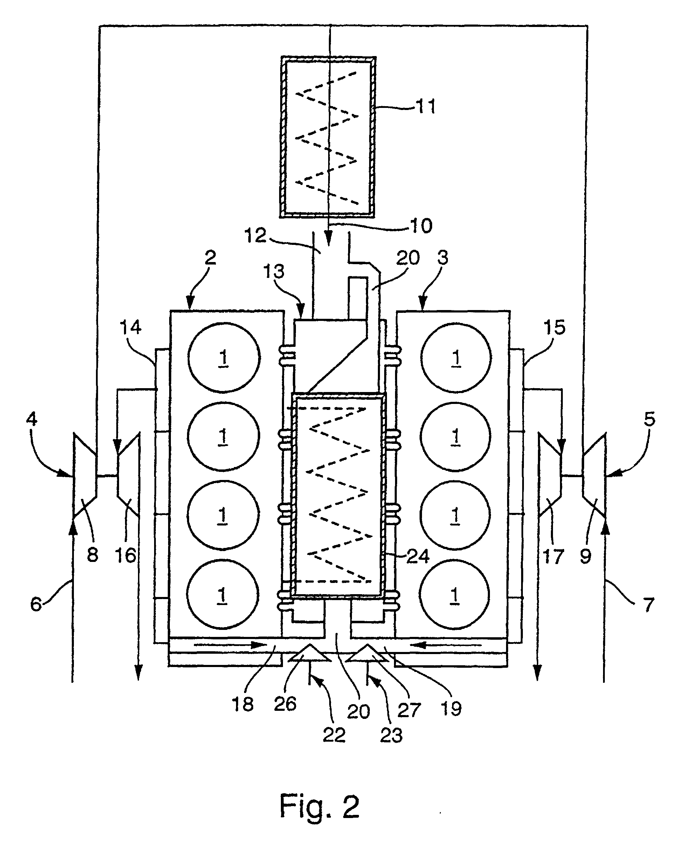

Entsprechend den Fig. 1 und 2 weist eine erfindungsgemäße Brennkraftmaschine beispielsweise acht Zylinder 1 auf, die in zwei Zylinderreihen 2 und 3 mit jeweils vier Zylindern 1 eingeteilt sind. Vorzugsweise sind die zwei Zylinderreihen 2 und 3 der Brennkraftmaschine V-förmig angeordnet, so daß es sich bei der in den Ausführungsbeispielen dargestellten Brennkraftmaschine jeweils um einen Achtzylinder-V-Motor handelt. Bei einem V-Motor werden die Zylinderreihen 2 und 3 in der Regel als Zylinderbänke bezeichnet.

Jeder Zylinderreihe bzw. Zylinderbank 2 und 3 ist ein separater Abgasturbolader 4 bzw. 5 zugeordnet, derart, daß die Abgase der einen Zylinderbank 2 zum Antrieb des einen Abgasturboladers 4 und die Abgase der anderen Zylinderbank 3 zum Antrieb des anderen Abgasturboladers 5 dienen.

Die Abgasturbolader 4 und 5 saugen jeweils über eine Frischluftzuführungsleitung 6 bzw. 7 Frischluft an, wobei diese jeweils in einem Verdichter 8 bzw. 9 des jeweiligen Abgasturboladers 4 bzw. 5 zur Ladeluft verdichtet wird. Nach den Verdichtern 8 und 9 wird die aufgeladene Ladeluft einer gemeinsamen Ladeluftleitung 10 zugeführt, in der ein Ladeluftkühler 11 angeordnet ist. Ein solcher Ladeluftkühler 11 bewirkt eine Abkühlung der im Rahmen der Verdichter-Aufladung erhitzten Ladeluft, wodurch der Massenstrom an Ladeluft deutlich erhöht werden kann.

Von der Ladeluftleitung 11 gelangt die abgekühlte Ladeluft in eine Luftzuführung 12 der Brennkraftmaschine, die in einen Luftsammler 13 einmündet, der die aufgeladene Luft an die Zylinder 1 beider Zylinderbänke 2 und 3 verteilt.

Nach der Verbrennung in den Zylindern 1 gelangen die Abgase über zwei, jeweils einer Zylinderbank 2 bzw. 3 zugeordneten Abgassammelleitungen 14 bzw. 15 jeweils in eine Turbine 16 bzw. 17 des jeweiligen Abgasturboladers 4 bzw. 5, wodurch diese angetrieben wird, um ihrerseits den damit gekoppelten Verdichter 8 bzw. 9 anzutreiben. Nach den Turbinen 16 und 17 werden die entspannten Abgase jeweils einer oder alternativ einer gemeinsamen Abgasreinigungseinrichtung und Schalldämpfungseinrichtung zugeführt.

An beide Abgassammelleitungen 14 und 15 ist jeweils eine Abgasabführungsleitung 18 bzw. 19 angeschlossen, die beide Teil einer Abgasrückführung sind. Die beiden Abgasabführungsleitungen 18 und 19 münden in eine gemeinsame Rückführungsleitung 20, in der ein Abgasrückführungswärmetauscher angeordnet ist, um den heißen Verbrennungsabgasen Wärmeenergie zu entziehen. Die Abgasrückführungsleitung 20 mündet in die Luftzuführung 12 der Brennkraftmaschine, wodurch Verbrennungsabgase der aufgeladenen Frischluft vor deren Eintritt in den Luftsammler 13 zugemischt werden können.

Die Abgasrückführung weist außerdem Ventilmittel 21 (Fig. 1) bzw. 22 und 23 (Fig. 2) auf, mit denen die Menge der rückgeführten Abgase einstellbar bzw. regelbar ist.

Während bei herkömmlichen Brennkraftmaschinen diese Ventilmittel 21; 22, 23 im Bereich der Einmündung der Rückführungsleitung 20 in die Luftzuführung 12 angeordnet werden, sind die genannten Ventilmittel 21; 22, 23 bei den Ausführungsformen der erfindungsgemäßen Brennkraftmaschine im Bereich der Einmündung der Abgasabführungsleitungen 18 und 19 in die Rückführungsleitung 20 angeordnet.

Entsprechend der in Fig. 1 dargestellten Ausführungsform umfaßt das Ventilmittel 21 auch ein Sperrmittel 25 und ist derart angeordnet, daß zum einen die Abgasabführungsleitungen 18 und 19 sowie die Rückführungsleitung 20 abgesperrt werden können und zum anderen die Einströmmenge der Abgase aus den Abgasabführungsleitungen 18 und 19 in die Rückführungsleitung 20 und somit die Abgasrückführungsrate einstellbar ist. Dabei dient das Ventilmittel 21 mit dem Sperrmittel 25 als Abgasrückführungsventil.

Im Unterschied dazu umfassen die Ventilmittel 22 und 23 in der in Fig. 2 dargestellten Ausführungsform ein erstes und ein zweites Sperrmittel 26 und 27, die jeweils in einer der Abgasabführungsleitungen 18 und 19 angeordnet sind und diese vor deren Einmündung in die Rückführungsleitung 20 absperren können. Darüber hinaus sind diese Sperrmittel 26 und 27 derart ausgebildet, daß mit Ihnen die Durchströmmenge der Abgase durch die Abgasabführungsleitungen 18 und 19, vorzugsweise parallel einstellbar ist, so daß auch hier die die Sperrmittel 26 und 27 umfassenden Ventilmittel 22 und 23 als Abgasrückführungsventil dienen, mit dem die Abgasrückführungsrate einstellbar ist.

Mit Hilfe der Ventilmittel 21 bzw. 22 und 23 kann die zwischen den Abgasabführungsleitungen 18 und 19 über deren Einmündung in die gemeinsame Rückführungsleitung 20 ausgebildete kommunizierende Verbindung gesperrt bzw. unterbrochen werden, wodurch die Zylinderbänke 2 und 3 abgasseitig vollständig voneinander entkoppelt sind. Dies wird entsprechend dem erfindungsgemäß vorgeschlagenen Verfahren zum Betreiben der Brennkraftmaschine nach der Erfindung dazu ausgenutzt, die bei relativ niedrigen Drehzahlen der Brennkraftmaschine vorliegende Stoßaufladung nicht durch abgasseitige Wechselwirkungen zwischen den Zylinderbänken 2 und 3 abzuschwächen. Wie bereits weiter oben erwähnt bestehen diese Wechselwirkungen bei niedrigen Drehzahlen vorwiegend darin, daß Druckpulsationen zwischen beiden Zylinderbänken 2 und 3 ausgebildet werden, die Masseschwingungen in den Abgasabführungsleitungen 18 und 19 induzieren. Diese Masseschwingungen haben dann zur Folge, daß verstärkt Reibungs- und Wärmeverluste auftreten, wobei diese Energieverluste den erzielbaren Ladedruck reduzieren.

Wenn die Zylinderbänke 2 und 3 abgasseitig durch die vorgeschlagene Anordnung der Ventilmittel bzw. Sperrmittel 21 bzw. 25 (Fig. 1) und 22, 23 bzw. 26, 27 (Fig. 2) voneinander entkoppelt sind, läßt sich somit ein höherer Ladedruck erzielen Erfindungsgemäß wird daher die Brennkraftmaschine derart betrieben, daß die abgasseitige Verbindung zwischen den Zylinderbänken 2 und 3 bei Drehzahlen, in denen die genannte Stoßaufladung stattfindet, gesperrt ist. Erst in Drehzahlbereichen, in denen im wesentlichen eine reine Stauaufladung vorliegt, wird die abgasseitige Verbindung der Zylinderbänke 2 und 3 wieder hergestellt. Auf diese Weise steht einem mit der erfindungsgemäßen Brennkraftmaschine ausgestatteten Kraftfahrzeug beispielsweise im Anfahrbereich eine erhöhte Motorleistung zur Verfügung.

## Patentansprüche

1. Brennkraftmaschine mit mehreren Zylindern (1), die in zwei Reihen (2, 3) - Zylinderbänken - angeordnet sind, mit zwei Abgasturboladern (4, 5), die jeweils durch die Abgase der Zylinder (1) einer Zylinderbank (2, 3) angetrieben sind, mit einer Luftversorgung (10, 12, 13), die die in den Verdichtern (8, 9) des jeweiligen Abgasturboladers (4, 5) verdichtete Frischluft den Zylindern (1) beider Zylinderbänke (2, 3) zuführt, mit einer Abgasrückführung, umfassend zwei Abgasabführungsleitungen (18, 19), die jeweils den rückzuführenden Teil der Abgase der Zylinder (1) einer Zylinderbank (2, 3) stromauf des jeweiligen Abgasturboladers (4, 5) abzweigen und einer gemeinsamen Rückführungsleitung (20) zuleiten, die zur Einleitung der rückzuführenden Abgase in verdichtete Frischluft in die Luftversorgung (10, 12, 13) mündet, wobei als Abgasrückführungsventil dienende Ventilmittel (21; 22, 23) vorgesehen sind, mit denen die Menge der rückgeführten Abgase einstellbar ist, wobei die Ventilmittel (21; 22, 23) Sperrmittel (25; 26, 27) aufweisen, mit denen eine zwischen den beiden Abgasabführungsleitungen (18, 19) ausgebildete kommunizierende Verbindung sperrbar ist.

2. Brennkraftmaschine nach Anspruch 1,
**dadurch gekennzeichnet,**
**daß** mit den Sperrmitteln (25; 26, 27) auch die Rückführungsleitung (20) sperrbar ist.

3. Brennkraftmaschine nach einem der vorhergehenden Ansprüche,
**dadurch gekennzeichnet,**
**daß** die Ventilmittel (21; 22, 23) im Bereich einer gemeinsamen Verbindungsstelle angeordnet sind, an der die Abgasabführungsleitungen (18, 19) mit der Rückführungsleitung (20) kommunizierend miteinander verbunden sind.

4. Brennkraftmaschine nach Anspruch 3,
**dadurch gekennzeichnet,**
**daß** die Ventilmittel (21; 22, 23) ein Ventilbauteil aufweisen, das an der Verbindungsstelle angeordnet ist, die Sperrmittel (25; 26, 27) enthält und als Abgasrückführungsventil dient.

5. Brennkraftmaschine nach einem der Ansprüche 1 bis 3,
**dadurch gekennzeichnet,**
**daß** die Ventilmittel (21; 22, 23) zwei Ventilbauteile aufweisen, die jeweils in einer der Abgasabführungsleitungen (18, 19) vor deren jeweiliger Einmündung in die Rückführungsleitung (20) angeordnet sind, jeweils die Sperrmittel (25; 26, 27) enthalten und als Abgasrückführungsventile dienen.

6. Brennkraftmaschine nach einem der vorhergehenden Ansprüche,
**dadurch gekennzeichnet,**
**daß** in der Rückführungsleitung (20) vor deren Einmünden in die Luftzuführung (12) ein Abgasrückführungswärmetauscher (24) angeordnet ist, in dem die rückgeführten Abgase gekühlt werden.

7. Brennkraftmaschine nach einem der vorhergehenden Ansprüche,
**dadurch gekennzeichnet,**
**daß** in der Luftzuführung (12) vor den Zylindern (1) ein Luftsammler (13) angeordnet ist, von dem aus die Zylinder (1) mit aufgeladener Luft versorgt werden.

8. Brennkraftmaschine nach einem der vorhergehenden Ansprüche,
**dadurch gekennzeichnet,**
**daß** stromab der Abgasturbolader (4, 5) ein Ladeluftkühler (11) angeordnet ist, in dem die den Zylindern (1) zugeführte Ladeluft gekühlt wird.

9. Brennkraftmaschine nach Anspruch 8,
**dadurch gekennzeichnet,**
**daß** die Rückführungsleitung (20) stromab des Ladeluftkühlers (11) in die Luftzuführung (12) einmündet.

10. Brennkraftmaschine nach einem der vorhergehenden Ansprüche,
**dadurch gekennzeichnet,**
**daß** in der Luftzuführung (12) stromauf der Einmündung der Rückführungsleitung (20) eine Drosselklappe angeordnet ist.

11. Verfahren zum Betreiben einer Brennkraftmaschine nach einem der vorhergehenden Ansprüche,
**dadurch gekennzeichnet,**
**daß** bei einem relativ niedrigen Drehzahlbereich der Brennkraftmaschine mit den Sperrmitteln (25; 26, 27) die kommunizierende Verbindung zwischen den Abgasabführungsleitungen (18, 19) gesperrt wird, während die kommunizierende Verbindung in den übrigen Drehzahlbereichen geöffnet ist.

12. Verfahren nach Anspruch 11,
**dadurch gekennzeichnet,**
**daß** bei gesperrter kommunizierender Verbindung zwischen den Abgasabführungsleitungen (18, 19) auch keine Abgase in die Luftzuführung (12) rückgeführt werden.

13. Verfahren nach Anspruch 11 oder 12,
**dadurch gekennzeichnet,**
**daß** der relativ niedrige Drehzahlbereich Drehzahlen von 0 bis 2000 Umdrehungen pro Minute umfaßt.

14. Verfahren nach Anspruch 13,
**dadurch gekennzeichnet,**
**daß** der Drehzahlbereich Drehzahlen von 800 bis 2000 Umdrehrungen pro Minute umfaßt.

15. Verfahren nach Anspruch 14,
**dadurch gekennzeichnet,**
**daß** der Drehzahlbereich Drehzahlen von 1200 bis 1800 Umdrehungen pro Minute umfaßt.

## Claims

1. Internal combustion engine with several cylinders (1) disposed in two rows (2, 3) - cylinder banks - with two exhaust gas turbo-chargers (4, 5) which are respectively driven by the exhaust gases of the cylinders (1) of one cylinder bank (2, 3), with an air supply (10, 12, 13) which delivers the fresh air compressed in the compressors (8, 9) of the respective exhaust gas turbo-charger (4, 5) to the cylinders (1) of both cylinder banks (2, 3), having an exhaust gas recirculation system comprising two exhaust gas discharge lines (18, 19) which respectively divert the recirculating part of the exhaust gases from the cylinders (1) of a cylinder bank (2, 3) upstream of the respective exhaust gas turbo-charger (4, 5) and deliver it to a common recirculation line (20), which opens into the air supply (10, 12, 13) in order to introduce the recirculating exhaust gases into compressed fresh air, valve means (21; 22, 23) being provided which function as an exhaust gas recirculation valve, by means of which the quantity of recirculated exhaust gases can be adjusted, the valve means (21; 22, 23) having shut-off means (25; 26, 27) with which a connection providing communication between the two exhaust gas discharge lines (18, 19) can be shut off.

2. Internal combustion engine as claimed in claim 1,
**characterised in that**
the recirculation line (20) can also be shut off by the shut-off means (25; 26, 27).

3. Internal combustion engine as claimed in one of the preceding claims,
**characterised in that**
the valve means (21; 22, 23) are disposed in the region of a common connection point, at which the exhaust gas discharge lines (18, 19) are mutually connected and communicate with the recirculation line (20).

4. Internal combustion engine as claimed in claim 3,
**characterised in that**
the valve means (21; 22, 23) have a valve component, which is disposed at the connection point containing the shut-off means (25; 26, 27) and serves as an exhaust gas recirculation valve.

5. Internal combustion engine as claimed in one of claims 1 to 3,
**characterised in that**
the valve means (21; 22, 23) have two valve components which are respectively disposed in one of the exhaust gas discharge lines (18, 19) prior to the point at which each opens into the recirculation line (20), respectively containing the shut-off means (25; 26, 27), and serve as exhaust gas recirculation valves.

6. Internal combustion engine as claimed in one of the preceding claims,
**characterised in that**
an exhaust gas heat exchanger (24) is disposed in the recirculation line (20) prior to the point at which it opens into the air delivery (12), where the recirculated exhaust gases are cooled.

7. Internal combustion engine as claimed in one of the preceding claims,
**characterised in that**
an air manifold (13) is disposed in the air delivery (12) before the cylinders (1), from which the cylinders (1) are supplied with charged air.

8. Internal combustion engine as claimed in one of the preceding claims.
**characterised in that**
a charge air cooler (11) is disposed downstream of the exhaust gas turbo-chargers (4, 5), in which the charge air delivered to the cylinders (1) is cooled.

9. Internal combustion engine as claimed in claim 8,
**characterised in that**
the recirculation line (20) opens into the air delivery (12) downstream of the charge air cooler (11).

10. Internal combustion engine as claimed in one of the preceding claims,
**characterised in that**
a throttle valve is disposed in the air delivery (12) upstream of the opening into the recirculation line (20).

11. Method of operating an internal combustion engine as claimed in one of the preceding claims,
so that in a relatively low speed range of the internal combustion engine, the connection providing communication between the exhaust gas discharge lines (18, 19) is shut off by the shut-off means (25; 26, 27), whereas in the other speed ranges the communicating connection is open.

12. Method as claimed in claim 11,
**characterised in that**
when the communicating connection between the exhaust gas discharge lines (18, 19) is shut off, no exhaust gases are recirculated to the air delivery (12).

13. Method as claimed in claim 11 or 12,
**characterised in that**
the relatively low speed range includes speeds from 0 to 2000 revolutions per minute.

14. Method as claimed in claim 13,
**characterised in that**
the speed range includes speeds of from 800 to 2000 revolutions per minute.

15. Method as claimed in claim 14,
**characterised in that**
the speed range includes speeds of from 1200 to 1800 revolutions per minute.

## Revendications

1. Moteur à combustion interne à plusieurs cylindres (1) qui sont agencés en deux rangées ou bancs de cylindres (2, 3), comportant deux turbocompresseurs à gaz d'échappement (4, 5) qui sont entraînés chacun par les gaz d'échappement des cylindres (1) d'un banc de cylindres (2, 3), comportant une alimentation en air (10, 12, 13) qui amène l'air frais comprimé par les compresseurs (8, 9) du turbocompresseur à gaz d'échappement jusqu'aux cylindres (1) des deux bancs de cylindres (2, 3), comportant une recirculation des gaz d'échappement avec deux conduites d'évacuation de gaz d'échappement (18, 19) qui font dériver la part respective à recirculer des gaz d'échappement des cylindres (1) d'un banc de cylindres (2, 3) en amont du turbocompresseur respectif à gaz d'échappement (4, 5) et qui les amènent à une conduite de recirculation commune (20) qui débouche dans l'alimentation en air (10, 12, 13) pour introduire les gaz d'échappement à recirculer dans l'air frais comprimé, des moyens formant valve (21 ; 22, 23) servant de valve de recirculation de gaz d'échappement étant prévus, au moyen desquels la quantité des gaz d'échappement recirculés est réglable, les moyens formant valve (21 ; 22, 23) comprenant des organes d'obturation (25 ; 26, 27) au moyen desquels une liaison de communication réalisée entre les deux conduites d'évacuation de gaz d'échappement (18, 19) est susceptible d'être obturée.

2. Moteur à combustion interne selon la revendication 1, **caractérisé en ce que** la conduite de recirculation (20) est également susceptible d'être obturée par les organes d'obturation (25 ; 26, 27).

3. Moteur à combustion interne selon l'une des revendications précédentes, **caractérisé en ce que** les moyens formant valve (21 ; 22, 23) sont agencés dans la zone d'un emplacement de liaison commun au niveau duquel les conduites d'évacuation de gaz d'échappement (18, 19) sont reliées en communication mutuelle à la conduite de recirculation (20).

4. Moteur à combustion interne selon la revendication 3, **caractérisé en ce que** les moyens formant valve (21 ; 22, 23) comprennent un composant de valve qui est agencé à l'emplacement de liaison, qui comprend les organes d'obturation (25 ; 26, 27) et qui sert de valve de recirculation de gaz d'échappement.

5. Moteur à combustion interne selon l'une des revendications 1 à 3, **caractérisé en ce que** les moyens formant valve (21 ; 22, 23) comprennent deux composants de valve qui sont agencés chacun dans l'une des conduites d'évacuation de gaz d'échappement (18, 19) en avant de leur embouchure respective dans la conduite de recirculation (20), qui comprennent chacun les organes d'obturation (25 ; 26, 27) et qui servent de valve de recirculation de gaz d'échappement.

6. Moteur à combustion interne selon l'une des revendications précédentes, **caractérisé en ce qu'**il est prévu dans la conduite de recirculation (20), en avant de son embouchure dans l'alimentation en air (12), un échangeur de chaleur de recirculation de gaz d'échappement (24) dans lequel les gaz d'échappement recirculés sont refroidis.

7. Moteur à combustion interne selon l'une des revendications précédentes, **caractérisé en ce qu'**il est prévu dans l'alimentation en air (12), en avant des cylindres (1), un collecteur d'air (13) à partir duquel les cylindres (1) sont alimentés en air de charge.

8. Moteur à combustion interne selon l'une des revendications précédentes, **caractérisé en ce qu'**il est prévu en aval du turbocompresseur à gaz d'échappement (4, 5) un refroidisseur d'air de charge (11) dans lequel l'air de charge amené aux cylindres (1) est refroidi.

9. Moteur à combustion interne selon la revendication 8, **caractérisé en ce que** la conduite de recirculation (20) débouche dans l'alimentation en air (12) en aval du refroidisseur d'air de charge (11).

10. Moteur à combustion interne selon l'une des revendications précédentes, **caractérisé en ce qu'**un clapet d'étranglement est agencé dans l'alimentation en air (12) en amont de l'embouchure de la conduite de recirculation (20).

11. Procédé pour faire fonctionner un moteur à combustion interne selon l'une des revendications précédentes, **caractérisé en ce que** dans une plage de vitesse de rotation relativement basse du moteur à combustion interne, la liaison de communication entre les conduites d'évacuation de gaz d'échappement (18, 19) est obturée au moyen des organes d'obturation (25 ; 26, 27), tandis que dans les autres plages de vitesse de rotation la liaison de communication est ouverte.

12. Procédé selon la revendication 11, **caractérisé en ce que** dans l'état obturé de la liaison de communication entre les conduites d'évacuation de gaz d'échappement (18, 19), aucun gaz d'échappement n'est recirculé dans l'alimentation en air (12).

13. Procédé selon l'une ou l'autre des revendications 11 et 12, **caractérisé en ce que** la plage de vitesse de rotation relativement basse inclut des vitesses de rotation de 0 à 2000 tours par minute.

14. Procédé selon la revendication 13, la plage de vitesse de rotation inclut des vitesses de rotation de 800 à 2000 tours par minute.

15. Procédé selon la revendication 14, **caractérisé en ce que** la plage de vitesse de rotation inclut des vitesses de rotation de 1200 à 1800 tours par minute.
